# EUROPÄISCHE PATENTSCHRIFT

(11) **EP 3 130 798 B1**
(45) Veröffentlichungstag und Bekanntmachung des Hinweises auf die Patenterteilung: **07.03.2018**
(21) Anmeldenummer: 16181623.6
(22) Anmeldetag: 28.07.2016
(51) Int. Cl.: F03D 7/02

(54) **VERFAHREN ZUM STEUERN VON PITCHANTRIEBEN EINER WINDENERGIEANLAGE, STEUERVORRICHTUNG UND WINDENERGIEANLAGE**
METHOD FOR CONTROLLING PITCH DRIVES OF A WIND TURBINE, CONTROL DEVICE AND WIND TURBINE
PROCEDE DE COMMANDE DE MOTEURS A PAS VARIABLE D'UNE EOLIENNE, DISPOSITIF DE COMMANDE ET EOLIENNE

(30) Priorität: 12.08.2015 DE 102015010227
(43) Veröffentlichungstag der Anmeldung: 15.02.2017
(73) Patentinhaber: Senvion GmbH, 22297 Hamburg (DE)
(72) Erfinder: WARFEN, Karsten, 23795 Söhren/Weede (DE); BEHL, Stefan, 24536 Neumünster (DE); HÖR, Oliver, 24796 Bredenbek (DE)
(74) Vertreter: Seemann & Partner Patentanwälte mbB

(56) Entgegenhaltungen:
- EP-A1- 2 667 020
- US-A1- 2009 148 286
- US-A1- 2013 271 056
- US-A1- 2015 152 843

## Beschreibung

Die Erfindung betrifft ein Verfahren zum Steuern von Pitchantrieben einer Windenergieanlage mit einem Rotor mit wenigstens zwei individuell pitchverstellbaren Rotorblättern, denen jeweils ein Pitchantrieb umfassend einen Pitchmotor, eine Pitchbremse und einen Pitchumrichter zugeordnet ist, wobei die Rotorblätter bei einem Übergang aus einem pitchgeregelten Volllastbereich in einen Teillastbereich in eine Rückstellung überführt werden, in der sie mittels der Pitchbremsen bei einem vorbestimmten oder vorbestimmbaren Pitchwinkel eingebremst werden und die Pitchumrichter deaktiviert werden. Die Erfindung betrifft weiter eine Steuervorrichtung für Pitchantriebe einer Windenergieanlage sowie eine Windenergieanlage.

Im Rahmen der vorliegenden Anmeldung wird unter dem Begriff "Pitch" der Rotorblattwinkel von winkeleinstellbaren Rotorblättern von Windenergieanlagen verstanden. Die Pitchantriebe, auch Blattverstellantriebe genannt, dienen dazu, die Blatteinstellwinkel der Rotorblätter zu verändern, üblicherweise zwischen einer Betriebsstellung, die bei oder nahe bei einer 0°-Einstellung ist, und einer sog. "Fahnenstellung" oder "90°-Einstellung", in der die Rotorblätter aus dem Wind gedreht sind und die Windenergieanlage von vorne anströmenden Wind eine minimale Angriffsfläche bietet, um den Rotor vom Wind her drehmomentlos zu stellen. Eine individuelle Pitchverstellung bedeutet, dass jeder Pitchantrieb ein Rotorblatt bewegt und individuell angesteuert werden kann. Eine zentrale Pitchsteuerung kann den drei Pitchantrieben gemeinsame Vorgaben geben, aber auch jedes Rotorblatt unabhängig von den anderen Rotorblättern adressieren.

Entsprechende Pitchantriebe umfassen einen elektrischen Pitchmotor, auch Blattverstellmotor genannt, der von einer Leistungselektronik, insbesondere einem Umrichter, angetrieben wird, und der im Bereich eines Rotorblattanschlusses an der Nabe an der Rotorblattwurzel eingreift und üblicherweise das Rotorblatt über ein Zahnradgetriebe um seine Längsachse dreht. Solche Pitchantriebe sind beispielsweise aus US 2009/0148286 A1 bekannt. In einem Volllastbereich, d.h. bei Windstärken bzw. Windgeschwindigkeiten, bei denen die Windenergieanlage ihre Nennleistung erreicht hat, erfolgt die Leistungsregelung durch Blattwinkelverstellung bzw. Pitchverstellung.

Im Teillastbereich bei kleineren Windgeschwindigkeiten unterhalb der Nennleistung der Windenergieanlage werden die Rotorblätter in die 0°-Position oder eine Position nahe 0° eingestellt und mittels einer Pitchbremse, die auf der Achse des Pitchmotors sitzt, eingebremst. Der Betrieb der Windenergieanlage im Teillastbereich kann Stunden bis Tage dauern, in denen die Pitchantriebe nicht benötigt werden. Die Pitchumrichter, d.h. die Umrichter für die Pitchmotoren, können in diesem Fall schlafengelegt bzw. deaktiviert werden und verbrauchen dann nur sehr wenig Strom. Der Pitchantrieb ist in diesem Fall leistungslos. Zum Regelbetrieb müssen die Pitchantriebe geweckt werden, was üblicherweise nur zu einer Verzögerung von Sekundenbruchteilen führt.

Ein im Betrieb kritischer Zeitraum ist die Zeit unmittelbar nach der Deaktivierung der Pitchumrichter. Diese weisen eine "Prekärzeit" von zwei Millisekunden bis zwei Sekunden auf, in denen ihr Zustand nicht voll aktiviert und auch nicht voll deaktiviert ist. Wenn innerhalb dieser Prekärzeit durch die Betriebsführung der Windenergieanlage ein Regelbetrieb angefordert wird, kann dies erhebliche Probleme verursachen und bis zum Absturz der Software des Pitchumrichters führen. In diesem Fall fällt die betreffende Pitchachse dann bei AC-Motoren komplett aus, bei DC-Antrieben ist dann nur noch der ungeregelte Akkubetrieb (Notfahrt) verwendbar, in der unabhängig vom Umrichter das Rotorblatt ungeregelt in die Fahnenstellung gefahren wird, wobei die Stromversorgung über einen Akku erfolgt.

Die Anforderung eines Regelbetriebs im Moment des Einbremsens und Abschaltens der einzelnen Pitchumrichter erfolgt üblicherweise in Beantwortung einer Böe oder auch durch eine moderate Windzunahme, meist im Grenzbereich zwischen Teillastbereich und Volllastbereich. In diesem Fall muss der Regelbetrieb unmittelbar wieder angefordert werden. Kommt die Böe oder Windzunahme erst einige Sekunden, Minuten oder Stunden nach dem Abschalten der Pitchumrichter, so sind keine Ausfälle bekannt. Der zeitlich ungünstigste Fall ist der, dass der Regelbetrieb in ca. 0 bis 1 Sekunde nach dem Einbremsen wieder benötigt wird. Dies kommt um Nennwind herum recht häufig vor, also bei der Windgeschwindigkeit, bei der die Nennleistung der Windenergieanlage erreicht wird. In diesem Prekärzeitbereich können sich die Pitchumrichter in einigen Fällen "aufhängen", so dass das Stoppen und Starten im Millisekundenbereich nicht klappt.

Eine bekannte Maßnahme, dies zu verhindern, besteht darin, in der Firmware des Pitchumrichters eine Reglerfreigabeverzögerung nach Abschaltvorgängen einzubauen. Damit werden Regelanforderungen innerhalb der Prekärzeit erst gar nicht aufgegriffen und ausgeführt, so dass der Pitchumrichter ausreichend Zeit hat, sicher in den deaktiven Zustand zu gelangen. Erst danach wird der Pitchumrichter wieder sicher aktiviert. Diese im Pitchumrichter eingesetzte Maßnahme bedeutet, dass die Blätter nach dem Rückstellungsbefehl immer wenigstens eine Sekunde Pause vor Anforderung eines Regelbetriebs haben. Dies ist bei Böen mit ungünstigem Timing dimensionierend, d.h. die Windenergieanlage muss entsprechend massiver ausgeführt werden, um solche Lastfälle auszuhalten.

Andererseits bedeutet der Verzicht auf eine solche Pause in den Pitchumrichtern, dass mehrere Blätter gleichzeitig ohne Drehmoment aus dem Pitchantrieb sein können, ohne dass die entsprechenden Pitchumrichter eine Störmeldung ausgeben. Bei den Pitchsystemen der Anmelderin wird dieser Fall im weiteren Verlauf über die Notfahrt bzw. Akkufahrt eingefangen. Es entstehen so zwar hohe Lasten, aber keine kritische Eskalation mit Überschreitung von Extremlasten. Diese Lasten sind jedoch wenig tolerierbar, da sie ebenfalls dimensionierend sind.

Demgegenüber liegt der vorliegenden Erfindung die Aufgabe zugrunde, einen sicheren Betrieb bei geringen Anforderungen an die Dimensionierung der Windenergieanlage zu realisieren.

Diese Aufgabe wird durch ein Verfahren zum Steuern von Pitchantrieben einer Windenergieanlage mit einem Rotor mit wenigstens zwei individuell pitchverstellbaren Rotorblättern, denen jeweils ein Pitchantrieb umfassend einen Pitchmotor, eine Pitchbremse und einen Pitchumrichter zugeordnet ist, wobei die Rotorblätter bei einem Übergang aus einem pitchgeregelten Volllastbereich in einen Teillastbereich in eine Rückstellung überführt werden, in der sie mittels der Pitchbremsen bei einem vorliegenden oder vorbestimmten Pitchwinkel eingebremst werden und die Pitchumrichter deaktiviert werden, gelöst, das dadurch weitergebildet ist, dass die Pitchumrichter der wenigstens zwei Rotorblätter in einer zeitlichen Sequenz nacheinander deaktiviert werden, wobei die Sequenz jeweils eine Wartezeit zwischen aufeinanderfolgenden Deaktivierungen aufweist.

Die Erfindung beruht auf dem Grundgedanken, dass der beschriebene Fall einer Böe mit einer Regelanforderung, die in der Prekärzeit der zwei oder mehr Pitchumrichter der Pitchantriebe eintrifft, eine sog. "common cause failure" (CCF) darstellt, also eine gemeinsame Ursache für mehrfaches Versagen von Systemkomponenten. Durch das zeitversetzte Schlafenlegen bzw. Deaktivieren der Pitchumrichter wird diese gemeinsame Fehlerursache ausgeschlossen und es wird höchstens noch ein Pitchantrieb betroffen. Gleichzeitig bedient sich die Erfindung der Erkenntnis, dass die Windenergieanlage auch dann noch sicher und ohne erhöhte Anforderungen an die Dimensionierung in einen sicheren Zustand bringbar ist, wenn nicht mehr als ein Pitchantrieb ausfällt. Dieser Fall ist in der Dimensionierung der Windenergieanlage vorzugsweise ohnehin bereits berücksichtigt.

Im Rahmen der Erfindung wird unter einem vorliegenden Pitchwinkel vorzugsweise ein aktueller Pitchwinkel verstanden.

Die Wartezeit zwischen dem zeitversetzten Schlafenlegen bzw. Deaktivierung der drei Pitchantriebe ist größer gewählt als die Prekärzeit der jeweiligen Pitchumrichter. Auf diese Weise befindet sich immer nur ein Pitchumrichtersystem in der "kritischen" bzw. "prekären" Phase. Damit ergeben sich die drei möglichen Betriebsfälle nach Anforderung einer Deaktivierung der Pitchumrichter. Im ersten Fall regeln zwei Blätter noch, während eines in die Rückstellung überführt wird. Die beiden regelnden Rotorblätter können dann auf eine Anforderung einer Pitchregelung, die auch eine Regelanforderung genannt wird, schnell reagieren. Im zweiten Fall regelt ein Blatt noch und ein anderes ist bereits länger als die Prekärzeit in Rückstellung und kann den Betrieb auch spontan, mit nur Millisekunden Verzögerung, wieder aufnehmen. Im dritten Fall sind zwei Rotorblätter bereits länger als die Prekärzeit deaktiviert und können schnell, also binnen Millisekunden, wieder aktiviert werden und Befehle annehmen. In allen diesen Fällen können zwei Rotorblätter schnell fehlerfrei Befehle annehmen. Erfolgt eine Regelanforderung in der Wartezeit zwischen zwei Deaktivierungen nach Ablauf der Prekärzeit des zuletzt deaktivierten Pitchumrichters, stehen sogar alle drei Pitchantriebe sofort oder nach einigen Millisekunden wieder zur Pitchverstellung zur Verfügung. Auf diese Weise ist das vorhandene Pitchausfallsrisiko sicher auf ein Rotorblatt reduziert.

Das erfindungsgemäße Verfahren wird bevorzugt im Rahmen einer sicherheitsgerichteten Steuerung bzw. Pitchregelung umgesetzt oder ausgeführt. Mit sicherheitsgerichteter Steuerung oder Sicherheitssteuerung werden in der Steuerungstechnik spezielle Steuerungen bezeichnet, die durch besondere Eigenschaften für den Einsatz in sicherheitskritischen Anwendungen besonders geeignet sind. Besonders bevorzugt ist hierbei eine Ausführung, bei der das Verfahren mittels einer Sicherheitssteuerung gemäß IEC 61508/IEC61511 mit **Sicherheits-Integritätslevel (SIL)** SIL2 oder SIL3, welche in der Rotornabe der Windenergieanlage angeordnet wird, durchgeführt wird. Der Vorteil der Anordnung der Sicherheitssteuerung in der Nabe liegt darin, dass die Sicherheitssteuerung dann bei Fehlfunktion einer übergeordneten Betriebsführung direkten Zugriff auf die Pitchumrichter hat, und somit Fehlfunktionen der Betriebsführung einfach übersteuern kann. Weiterhin ist die Sicherheitssteuerung in der Nabe in unmittelbarer Nähe der Pitchumrichter angeordnet, so dass durch den kurzen Kommunikationsweg nur ein minimales Risiko bezüglich Kommunikationsfehler besteht, insbesondere im Vergleich zu einem System, bei dem die Kommunikation von der Steuerung zum Pitchumrichter über einen Schleifring oder eine drahtlose Kommunikationsstrecke führt.

Eine weitere Maßnahme, die im Rahmen der vorliegenden Erfindung vorteilhafterweise vorgenommen werden kann, ist eine redundante Pitchregelung, bei der Rechenoperationen durch wenigstens zwei Prozessoren parallel durchgeführt werden und bei Abweichungen ein sicherer Zustand der Windenergieanlage eingeleitet wird. Alternativen dieser Vorgehensweise beinhalten den Betrieb von zwei Prozessoren mit identischen Aufgaben, die sich gegenseitig kontrollieren oder durch einen dritten Prozessor kontrolliert werden, oder den Betrieb von drei Prozessoren mit identischen Aufgaben, wobei bei Abweichungen der Ergebnisse das Majoritätsprinzip angewandt wird, um zu entscheiden, welches Ergebnis verwendet wird. Letztere Alternative bietet einen Vorteil bei der Verfügbarkeit der Windenergieanlage.

Vorzugsweise umfasst das Deaktivieren der Pitchumrichter ein Abschalten oder ein Versetzen in einen Schlafzustand.

Mit Schlafzustand des Pitchumrichters ist in diesem Dokument ein Zustand definiert, bei dem der Eigenenergieverbrauch des Umrichters erheblich, insbesondere um mehr als 90%, unter dem des Normalbetriebes abgesenkt ist.

Die Wartezeit beim aufeinanderfolgenden Deaktivieren von Pitchumrichtern ist vorzugsweise größer als eine Prekärzeit der Pitchumrichter, in der eine sichere Rückkehr aus der Deaktivierung in den Betrieb nicht gewährleistet ist, wobei die Wartezeit insbesondere zwischen 1,5 und 12 Sekunden beträgt, insbesondere 2 Sekunden oder mehr. Die Abschaltung bzw. Deaktivierung der Pitchumrichter und das Einbremsen der Rotorblätter erfolgt bevorzugt, wenn sich z. B. für mehr als 30 sec oder für mehr als 1 min der Pitchsollwert nicht verändert. In der Regel tritt dies im Bereich der Betriebsstellung, d.h. bei Pitchwinkeln zwischen -2° und +6° auf kann aber auch bei deutlich größeren Blattwinkeln, z.B. im Trudelbetrieb und/oder bei Windstille auftreten.

Das Verfahren erfährt dann eine vorteilhafte Weiterbildung, wenn die Pitchumrichter nach ihrer Deaktivierung innerhalb einer Regelwartezeit, die gleich lang wie die Prekärzeit oder länger als die Prekärzeit ist, insbesondere gleich der Wartezeit, keine Regelanforderungen erhalten oder verarbeiten. Dies bedeutet, dass entweder die Pitchumrichter so eingerichtet sind, dass sie auf Regel- bzw. Steueranfragen innerhalb der Prekärzeit nicht ansprechen und somit ein unsicherer Zustand erst gar nicht entstehen kann, oder dass entweder die Betriebsführung oder die Pitchregelung solche Regelanfragen an den soeben deaktivierten Pitchumrichter nicht weiterleiten. Die oben beschriebenen Fälle bestehen damit weiter, mit dem Unterschied, dass in diesem Fall die Pitchumrichter zwar ebenfalls während der Prekärzeit nicht reagieren, jedoch davor geschützt sind, durch eine Regelanfrage in einen "aufgehängten" Betriebszustand zu geraten. Die Pitchverstellung des betroffenen Rotorblattes kann dann nach Ablauf der Prekärzeit, wieder aufgenommen werden.

Eine Deaktivierung der Umrichter oder eines Umrichters ist wenig zeitkritisch; es sind große Wartezeiten akzeptabel. In umgekehrter Richtung, also bei Aktivierung eines Umrichters, muss dies so schnell wie möglich erfolgen. Damit erfolgt die Aktivierung nur durch die Prekärzeit verzögert.

Bei Deaktivierung ist die Wartezeit vorzugsweise zur Sicherheit größer als die Prekärzeit.

Wenn die Blätter synchron positioniert eingebremst werden sollen, erfolgt dies bevorzugt in gleicher Blattposition bezüglich des Rotorumlaufs. Dies kann in einer Ausführungsform mit einer konstanten Wartezeit bei gleicher Drehzahl erfolgen. Dies geschieht somit vorzugsweise bei Nenndrehzahl. In diesem Fall kann die Wartezeit als Positionierungswartezeit angesehen werden. Im Teillastbetrieb mit reduzierter Drehzahl wird die Wartezeit drehzahlabhängig verändert, vorzugsweise erhöht. Am genauesten und vorzugsweise erfolgt die Deaktivierung durch das Signal eines Positionssensors nach Ablauf der Prekärzeit, also ohne Wartezeit, nur durch den Positionssensor getriggert. Bei großen Rotoren bei Teillastdrehzahl kann die Wartezeit daher schon mehr als 10 sek betragen.

Wenn die Überführung der Rotorblätter in die Rückstellung, vorzugsweise jeweils in einer vorbestimmten oder vorbestimmbaren Rotorposition, beginnt, insbesondere in der 5-Uhr-Position oder der 11-Uhr-Position des jeweiligen Rotorblatts, ergibt sich der Vorteil, dass für die lange Phase des Teillastbetriebs die Rotorblätter mit möglichst wenig aerodynamischer Grundanregung eingebremst werden und somit weniger Blattwinkelabweichungen zueinander eingestellt werden. Beispielsweise ist in der 5-Uhr-Position bei einem gemäßigten Blatttorsionsmoment das Rotorblatt bereits aus dem Durchgang durch die 3-Uhr-Stellung in der Pitch-Getriebelose klar positioniert. Bei üblichen Rotordrehzahlen ergeben sich Wartezeiten zwischen den jeweiligen Abschnitten der aufeinander folgenden Pitchumrichter von ca. 3 Sekunden bis 8 Sekunden bei Nenndrehzahl. Diese Maßnahme wird vorzugsweise unterstützt durch eine Rotorpositionserfassung, die in einigen Windenergieanlagen bereits vorhanden ist.

Als Getriebelose wird ein Spiel im Getriebe bezeichnet, in diesem Fall das Spiel im Getriebe des Pitchantriebs. In der waagerechten 3-Uhr-Stellung und umgekehrt in der gegenüberliegenden 9-Uhr-Stellung ist das Rotorblatt bereits in einer jeweils fest definierten Position positioniert, bedingt durch das Eigengewicht und die Gewichtsverteilung. Vergleichsweise undefiniert ist die Stellung des Rotorblatts hingegen in der Getriebelose des Pitchantriebs in der obersten und in der untersten Stellung, also der 12-Uhr-Position und der 6-Uhr-Position. Die günstigen Stellungen zum Einbremsen können von Blatttyp zu Blatttyp variieren und in Simulationsrechnungen unter Berücksichtigung der Geometrie und der Struktur von Blatt und Pitchsystem sowie der Blattaerodynamik ermittelt werden.

Die Auswahl der Rotorposition zu Beginn der Überführung der Rotorblätter in die Rückstellung ist in solchen Fällen vorteilhafterweise von einer aktuellen Windgeschwindigkeit und/oder einer aktuellen Rotordrehzahl und/oder einer aktuellen Leistung der Windenergieanlage abhängig. Auch dies hängt von dem Blatttyp und dem Windenergieanlagentyp ab. Rein beispielhaft und nicht einschränkend sei ausgeführt, dass für bestimmte Windenergieanlagen beispielsweise bei Windgeschwindigkeiten von größer als 8 m/s die 5-Uhr-Position als Anfangsstellung und bei Windgeschwindigkeiten von weniger als 8 m/s die 11-Uhr-Position des Rotors gewählt werden kann. Auch die Leistung der Windenergieanlage kann ein Kriterium sein, wobei etwa bei mehr als 50 % der Nennleistung die 5-Uhr-Position und bei weniger als 50 % der Nennleistung die 11-Uhr-Position gewählt werden kann. Anstelle der exakten 5-Uhr-Position und der 11-Uhr-Position können auch andere Positionen beispielsweise in einem Sektor zwischen der 3-Uhr-Position und der 6-Uhr-Position bzw. zwischen der 9-Uhr-Position und der 12-Uhr-Position gewählt werden.

Vorzugsweise wird das Überführen der Rotorblätter in die Rückstellung erst begonnen, wenn alle Rotorblätter den vorbestimmten oder vorbestimmbaren Pitchwinkel eingenommen haben. Ebenfalls ist es vorteilhaft, wenn das Deaktivieren abgebrochen wird, wenn eine Anforderung einer Pitchregelung eintrifft. Damit werden alle Pitchantriebe bzw. deren Pitchumrichter wieder aufgeweckt, um eine vollständige Reaktion auf die Regelanforderung zu ermöglichen.

Wenn die Rotorblätter sich in der Rückstellung befinden, ergibt sich eine weitere Vermeidung von gemeinsamen Fehlerursachen ("common cause failures") in vorteilhafter Weise, wenn die Pitchumrichter bei Anforderung einer Pitchregelung zeitverzögert aktiviert werden, insbesondere mit Verzögerungen, die nicht synchron sind mit einer Periodendauer im Stromnetz, insbesondere mit einer Verzögerung in einem Bereich zwischen 11 und 29 ms, insbesondere 23 oder 27 ms. Eine Verzögerung von 23 ms oder 27 ms ist weder mit einem 50 Hz-Stromnetz noch mit einem 60 Hz-Stromnetz synchron. Diese Maßnahme stellt sicher, dass Störungen im Stromnetz, die zeitlich sehr kurzfristig auftreten, nicht alle drei Pitchumrichter gleichzeitig beeinträchtigen. Durch die periodendauer-asynchrone Aktivierung der Pitchumrichter wird außerdem erreicht, dass jeder Pitchumrichter bei einem phasenversetzten Zustand des Stromnetzes aktiviert wird und somit phasenabhängige gemeinsame Fehlerursachen vermieden werden.

Eine vorteilhafte Weiterbildung des Verfahrens liegt darin, dass der Pitchumrichter für dasjenige Rotorblatt mit dem momentan größten Drehmomentbedarf zuerst eingeschaltet wird. Der Pitchantrieb bzw. Pitchumrichter für das Rotorblatt mit dem geringsten momentanen Drehmomentbedarf wird dann vorzugsweise zuletzt eingeschaltet. Der Drehmomentbedarf kann an der Rotorposition und dem Betriebspunkt der Windenergieanlage für eine grobe Entscheidung abgeleitet werden.

Die der Erfindung zugrunde liegende Aufgabe wird ebenfalls durch eine Steuervorrichtung für Pitchantriebe einer Windenergieanlage mit einem Rotor mit wenigstens zwei individuell pitchverstellbaren Rotorblättern, denen jeweils ein Pitchantrieb umfassend einen Pitchmotor, eine Pitchbremse und einen Pitchumrichter zugeordnet ist, gelöst, wobei die Steuervorrichtung ausgebildet ist, Steuerbefehle über eine Datenkommunikationsschnittstelle an die Pitchantriebe zu senden und die Rotorblätter in eine Rückstellung zu überführen, in der sie mittels der Pitchbremsen bei einem vorbestimmten oder vorbestimmbaren Pitchwinkel eingebremst werden und die Pitchumrichter deaktiviert werden, die dadurch weitergebildet ist, dass die Steuervorrichtung ausgebildet und eingerichtet ist, die Pitchumrichter der wenigstens zwei Rotorblätter in einer zeitlichen Sequenz nacheinander zu deaktivieren, wobei die Sequenz jeweils eine Wartezeit zwischen aufeinanderfolgenden Deaktivierungen aufweist.

Vorzugsweise ist diese erfindungsgemäße Steuervorrichtung ausgebildet und eingerichtet, ein zuvor beschriebenes erfindungsgemäßes Verfahren durchzuführen. Die Steuervorrichtung ist eine Datenverarbeitungsanlage wie ein Computer oder eine speicherprogrammierbare Steuerung, die entweder in der Rotornabe als eigenständiger Pitchregler angeordnet ist oder Teil der Betriebsführung in der sogenannten "top box" in dem Maschinenhaus oder in einer "Boden Box" im Turmfuß oder Turmfußbox der Windenergieanlage ist.

Die der Erfindung zugrunde liegende Aufgabe wird schließlich durch eine Windenergieanlage mit einem Rotor mit wenigstens zwei individuell pitchverstellbaren Rotorblättern gelöst, denen jeweils ein Pitchantrieb umfassend einen Pitchmotor, eine Pitchbremse und einen Pitchumrichter zugeordnet ist, die eine zuvor beschriebene erfindungsgemäße Steuervorrichtung für die Pitchantriebe umfasst.

Die Steuervorrichtung und die Windenergieanlage weisen jeweils die gleichen Merkmale, Vorteile und Eigenschaften auf wie das zuvor beschriebene erfindungsgemäße Verfahren, zu dessen Durchführung sie eingerichtet und ausgebildet sind. Bei den in Windenergieanlagen eingesetzten Computern und speicherprogrammierbaren Steuerungen handelt es sich um Computerprogramme bzw. Programmierungen der speicherprogrammierbaren Steuerungen, die zur Umsetzung des erfindungsgemäßen Verfahrens dienen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen schematischen Querschnitt durch die Gondel einer bekannten Windenergieanlage,
- Fig. 2: eine schematische Darstellung eines Pitchsystems eines dreiblättrigen Rotors und
- Fig. 3: ein Zeitdiagramm bzgl. des Schlafenlegens eines Pitchsystems einer Windenergieanlage.

In den Zeichnungen sind jeweils gleiche oder gleichartige Elemente und/oder Teile mit denselben Bezugsziffern versehen, so dass von einer erneuten Vorstellung jeweils abgesehen wird.

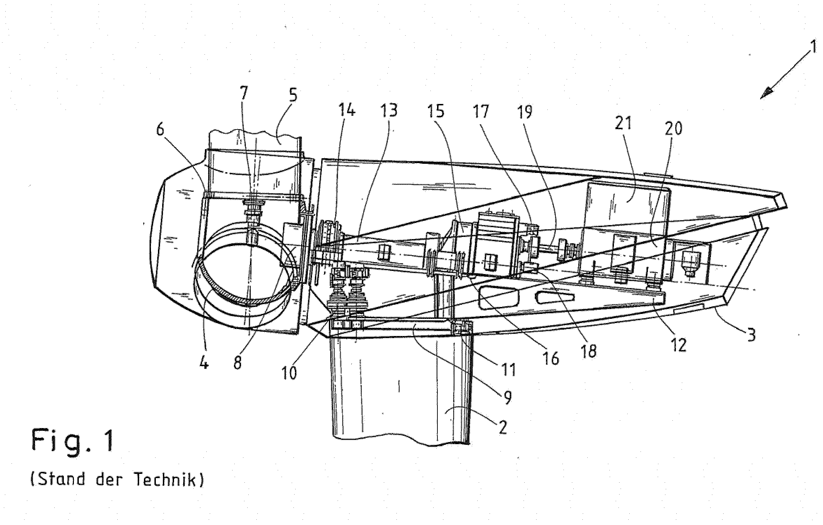

In Fig. 1 ist eine Querschnittsdarstellung durch eine Gondel einer bekannten Windenergieanlage, beispielsweise der Windenergieanlage MD70 der Anmelderin, gezeigt. Die Gondel 3 sitzt auf einem Turm 2, dessen gondelnaher Abschnitt dargestellt ist. Links in Fig. 1 ist ein Rotor dargestellt mit einer Rotornabe 4, Rotorblättern 5, die nur im Bereich der Rotorblattwurzel dargestellt sind. Die Rotorblätter 5 weisen im Bereich der Rotorblattwurzel jeweils ein Rotorblattlager 6 auf, an das ein Blattverstellantrieb bzw. Pitchantrieb 7 angreift. Der Pitchantrieb 7 umfasst einen Pitchmotor, der durch einen Pitchregler 8 angesteuert wird und im Betrieb der Windenergieanlage 1 den Blatteinstellwinkel bzw. Pitchwinkel des jeweiligen Rotorblatts 5 verändert. Nicht dargestellt ist eine federbelastete Pitchbremse, die auf der Achse des Pitchmotors sitzt. Ebenfalls nicht dargestellt sind individuelle Umrichter der Pitchantriebe 7.

Die Gondel 3 beherbergt einen Maschinenträger 12, der über einen Turmkopfdrehkranz 9 mit dem Turm 2 verbunden ist. Am Turmkopfdrehkranz 9 greifen Windnachführungsmotoren 10 einer Azimutverstellung an, die die Gondel bzw. den Rotor in Richtung auf die herrschende Windrichtung ausrichten. Hierzu sind vier Windnachführungsmotoren 10 vorhanden, von denen zwei auf der dargestellten Seite angeordnet sind und zwei verdeckt dahinter auf der anderen Seite des Maschinenträgers 12. Ebenfalls greifen am Turmkopfdrehkranz 9 Azimutbremsen 11 an, die der Arretierung der Azimuteinstellung des Rotors dienen.

Der Rotor treibt eine Rotorwelle 13 an, die in einem als Wälzlager ausgebildeten Rotorlager 14 drehbar gelagert ist. Die Rotorwelle 13 treibt ein Planetengetriebe 15, das die langsame Drehbewegung der Rotorwelle in eine schnelle Drehbewegung einer Generatorwelle 19, die mit Kupplungen dargestellt ist, umsetzt, die wiederum einen Generator 20 zur Stromerzeugung antreibt, der mit einem Wärmetauscher 21 ausgestattet ist.

Zwei weitere Lagerpunkte des Triebstrangs bestehen in den elastischen Getriebeaufhängungen bzw. Auflagern 16, von denen eines in Fig. 1 dargestellt ist, während sich das andere symmetrisch auf der anderen Seite des Planetengetriebes 15 befindet und somit durch das Planetengetriebe 15 verdeckt ist. Diese sind so ausgelegt, dass sie sowohl Torsionslasten als auch Biegelasten der Rotorwelle 13 aufnehmen, die über das Planetengetriebe 15 an die Auflager 16 und weiter auf den Maschinenträger 12 übertragen werden.
Das Planetengetriebe 15 weist außerdem eine Rotorbremse 17 und einen Schleifringüberträger 18 auf.

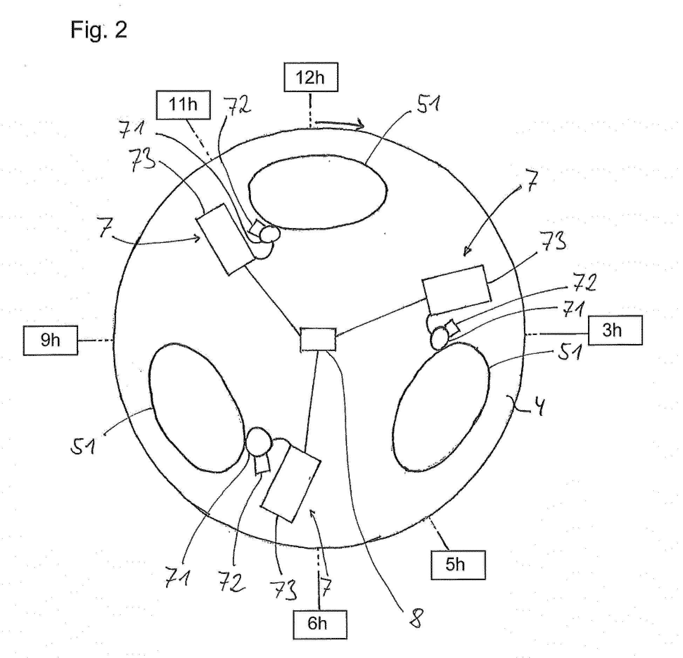

Fig. 2 zeigt schematisch eine Ansicht in eine Rotornabe 4 hinein mit drei Rotorblattanschlüssen 51, die in Winkelabständen von 120° zueinander angeordnet sind. Jedem Rotorblattanschluss 51 ist jeweils ein Blattverstellantrieb bzw. Pitchantrieb 7 zugeordnet, der die Komponenten Pitchmotor 71, Pitchbremse 72 und Pitchumrichter 73 umfasst, die jeweils schematisch dargestellt sind. Die Pitchumrichter 73 versorgen die Pitchmotoren 71 jeweils mit Gleich- oder Wechselstrom, abhängig vom Typ des Pitchmotors 71 als AC- oder DC-Motor, damit diese die Rotorblätter an den Rotorblattanschlüssen 51 drehen können. Die Pitchbremsen 72 werden angelegt, die Rotorblätter also eingebremst, wenn die Pitchumrichter 73 deaktiviert werden.

Alle drei Pitchumrichter 73 sind mit einer zentralen Steuervorrichtung 8 bzw. Pitchregelung verbunden, die mit einer nicht dargestellten Betriebsführung verbunden ist und Anforderungen für Pitchregelungen erhält und dafür sorgt, dass die Pitchantriebe 7 die Rotorblätter in die gewünschte Pitchposition fahren.

Außerhalb der Rotornabe 4 sind zusätzlich einige Rotorblattpositionen dargestellt, nämlich zuoberst die 12-Uhr-Position ("12h"), die 3-Uhr-Position ("3h"), die 5-Uhr-Position ("5h"), die 6-Uhr-Position ("6h"), die 9-Uhr-Position ("9h") und die 11-Uhr-Position ("11h"). Dies unterstellt eine Rotation der Rotornabe 4 gemäß dem Pfeil neben der 12h-Position im Uhrzeigersinn. Die Rotorblätter unterliegen im Betrieb Belastungen aus der Gravitation sowie der Aerodynamik, die zu Torsionsmomenten führen und zu Bewegungen innerhalb des Getriebespiels des Pitchantriebs führen können. Bezüglich der in Fig. 2 nicht dargestellten Gravitationsrichtung, die nach unten in die 6h-Richtung zeigt, stehen die Rotorblätter jeweils in der 3h-Position und in der 9h-Position waagerecht. Unter der Annahme, dass der Gravitationseffekt dominiert, sind Rotorblätter in den waagerechten Positionen in Bezug auf ihre Pitchposition und das Getriebespiel durch große Torsionsmomente optimal festgelegt. Etwa in der 5h-Position und der 11h-Position befinden sich die Rotorblätter zusätzlich in einer Position geringen Drehmoments, das auf die Rotorblätter in Bezug auf ihre Pitchposition ausgeübt wird und gleichzeitig noch immer in Bezug auf das Spiel bzw. die Getriebelose einer definierten Position, , da die Blätter aus dem Bereich der großen Torsionsmomente kommen. Somit sind diese Positionen bzw. Bereiche um diese Position herum beispielsweise ideal zum Einleiten der Überführung in die Rückstellung, d.h. zum Deaktivieren der Pitchumrichter 73 und zum Einbremsen der Rotorblätter, da die Position im Getriebespiel eindeutig definiert ist und zugleich geringe Torsionsmomente vorliegen, die beim Einbremsen des Pitchantriebs ein Durchrutschen vermeiden. Unterschiedliche Blattgeometrien sowie die Dominanz aerodynamischer Effekte können die bevorzugten Winkelpositionen variieren, so dass diese für die jeweilige Rotorkonfiguration in Simulationsrechnungen oder Messungen zu ermitteln sind.

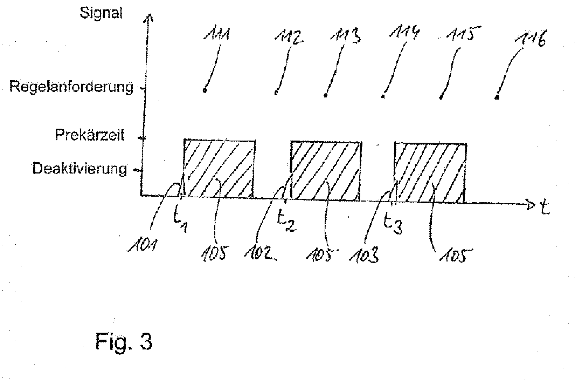

Fig. 3 zeigt ein Diagramm mit einer Zeitachse t und einer vertikalen Achse mit verschiedenen Signalen. So sendet die Steuervorrichtung 8 zu den Zeitpunkten t₁, t₂ und t₃ jeweils Deaktivierungssignale 101, 102 und 103 an die Pitchantriebe 7 aus Fig. 2, die dazu führen, dass die entsprechenden Rotorblätter durch Aktivierung der Pitchbremsen 72 eingebremst werden und die Pitchumrichter 73 deaktiviert werden. Bei jedem Pitchumrichter 73 schließt sich nach dem ihm zugewiesenen Deaktivierungssignal 101, 102, 103 eine Prekärzeit 105 an, die jeweils abgewartet wird, bevor das nächstfolgende Deaktivierungssignal 102, 103 erfolgt. Auf diese Weise kann es nicht vorkommen, dass sich zwei Pitchumrichter 73 gleichzeitig in ihrer Prekärzeit befinden.

In der obersten Zeile sind mehrere Zeitpunkte 111 bis 116 angezeigt, in denen eine Regelanforderung durch die Betriebsführung erfolgen könnte.

Die erste Regelanforderung 111 erfolgt innerhalb der Prekärzeit 105 des ersten Pitchumrichters 73. In diesem Zeitpunkt kann der erste Pitchumrichter 73 nicht reagieren, die beiden anderen Pitchantriebe 7 mit ihren immer noch aktiven Pitchumrichtern 73 befinden sich jedoch im normalen Regelmodus und können reagieren. Ein sicherer Betrieb der Windenergieanlage 1 ist damit gewährleistet.

Eine Regelanforderung 112 würde nach Ablauf der Prekärzeit 105 des zuerst deaktivierten Pitchumrichters 73, also nachdem der erste Pitchumrichter 73 bereits erfolgreich deaktiviert ist, erfolgen, und bevor die beiden anderen Deaktivierungssignale 102, 103 erfolgt sind. In diesem Fall können alle drei Rotorblätter schnell reagieren, da das erste Rotorblatt bzw. dessen Pitchantrieb 7 schnell aufgeweckt wird und die beiden anderen sich ohnehin noch im Regelbetrieb befinden.

Die Regelanforderung 113 erfolgt während der Prekärzeit 105 des zweiten Pitchumrichters 73. In diesem Fall kann es passieren, dass dieser zweite Pitchumrichter 73 nicht wieder aktiviert werden kann. Es stehen aber noch der dritte, noch aktive, Pitchumrichter 73 des entsprechenden Pitchantriebs 7 zur Verfügung sowie der erste, bereits erfolgreich schlafengelegte, Pitchantrieb 7, der schnell wieder reaktiviert werden kann.

Die Regelanforderung 114 erfolgt wieder in der sicheren Zeit nach Ablauf der Prekärzeit 105 des zweiten Pitchumrichters 73 und vor der dritten Deaktivierungsanforderung 103, so dass die ersten beiden bereits schlafengelegten Pitchumrichter 73 schnell reaktiviert werden können und der dritte Pitchantrieb 7 sich noch im Regelmodus befindet. So stehen alle drei Pitchantriebe 7 schnell zur Verfügung.

Die Regelanforderung 115 erfolgt während der Prekärzeit 105 des dritten Pitchumrichters 73. Die beiden anderen Pitchumrichter 73 sind bereits erfolgreich schlafengelegt, können jedoch sehr schnell reaktiviert werden, so dass auch hier ein sicherer Betrieb gewährleistet bleibt.

Die Regelanforderung 116 erfolgt nach erfolgreichem Schlafenlegen bzw. der Aktivierung aller drei Pitchantriebe 7 bzw. Pitchumrichter 73, so dass auch hier durch schnelles Aufwecken der drei Pitchumrichter 73 eine vollständige Reaktion des Pitchsystems gewährleistet ist.

Die Skalierung der Zeitachse der Fig. 3 ist rein willkürlich und nicht maßstäblich gewählt. Insbesondere kann die Prekärzeit mit z.B. einigen wenigen Millisekunden um Größenordnungen kleiner ausfallen als die Zeit zwischen zwei Prekärzeiten mit z.B. 10 sec.

Im Rahmen der Erfindung sind Merkmale, die mit "insbesondere" oder "vorzugsweise" gekennzeichnet sind, als fakultative Merkmale zu verstehen.

### Bezugszeichenliste

- 1: Windenergieanlage
- 2: Turm
- 3: Gondel
- 4: Rotornabe
- 5: Rotorblatt
- 6: Rotorblattlager
- 7: Pitchantrieb
- 8: Steuervorrichtung
- 9: Turmkopfdrehkranz
- 10: Windnachführungsmotoren
- 11: Azimutbremsen
- 12: Maschinenträger
- 13: Rotorwelle
- 14: Rotorlager
- 15: Planetengetriebe
- 16: elastische Getriebeaufhängung
- 17: Rotorbremse
- 18: Schleifringüberträger
- 19: Generatorwelle mit Kupplungen
- 20: Generator
- 21: Wärmetauscher
- 51: Rotorblattanschluss
- 71: Pitchmotor
- 72: Pitchbremse
- 73: Pitchumrichter
- 101: erstes Deaktivierungssignal
- 102: zweites Deaktivierungssignal
- 103: drittes Deaktivierungssignal
- 105: Prekärzeit
- 111 - 116: Regelanforderung

## Patentansprüche

1. Verfahren zum Steuern von Pitchantrieben (7) einer Windenergieanlage (1) mit einem Rotor mit wenigstens zwei individuell pitchverstellbaren Rotorblättern (5), denen jeweils ein Pitchantrieb (7) umfassend einen Pitchmotor (71), eine Pitchbremse (72) und einen Pitchumrichter (73) zugeordnet ist, wobei die Rotorblätter (5) bei einem Übergang aus einem pitchgeregelten Volllastbereich in einen Teillastbereich in eine Rückstellung überführt werden, in der sie mittels der Pitchbremsen (72) bei einem vorliegenden oder vorbestimmten Pitchwinkel eingebremst werden und die Pitchumrichter (73) deaktiviert werden, **dadurch gekennzeichnet, dass** die Pitchumrichter (73) der wenigstens zwei Rotorblätter (5) in einer zeitlichen Sequenz nacheinander deaktiviert werden, wobei die Sequenz jeweils eine Wartezeit zwischen aufeinanderfolgenden Deaktivierungen aufweist.

2. Verfahren nach Anspruch 1, **dadurch gekennzeichnet, dass** das Deaktivieren der Pitchumrichter (73) ein Abschalten oder ein Versetzen in einen Schlafzustand umfasst.

3. Verfahren nach Anspruch 1 oder 2, **dadurch gekennzeichnet, dass** die Wartezeit größer ist als eine Prekärzeit (105) der Pitchumrichter (73), in der eine sichere Rückkehr aus der Deaktivierung in den Betrieb nicht gewährleistet ist, wobei die Wartezeit insbesondere zwischen 1,5 und 12 Sekunden beträgt, insbesondere 2 Sekunden oder mehr.

4. Verfahren nach einem der Ansprüche 1 bis 3, **dadurch gekennzeichnet, dass** die Pitchumrichter (73) nach ihrer Deaktivierung innerhalb einer Regelwartezeit, die gleich lang wie die Prekärzeit oder länger als die Prekärzeit ist, insbesondere gleich der Wartezeit, keine Regelanforderungen erhalten oder verarbeiten.

5. Verfahren nach einem der Ansprüche 1 bis 4, **dadurch gekennzeichnet, dass** die Überführung der Rotorblätter (5) in die Rückstellung jeweils in einer vorbestimmten oder vorbestimmbaren Rotorposition beginnt, insbesondere in der 5-Uhr-Position oder der 11-Uhr-Position des jeweiligen Rotorblatts (5).

6. Verfahren nach Anspruch 5, **dadurch gekennzeichnet, dass** die Auswahl der Rotorposition zu Beginn der Überführung der Rotorblätter (5) in die Rückstellung von einer aktuellen Windgeschwindigkeit, einer aktuellen Rotordrehzahl und/oder einer aktuellen Leistung der Windenergieanlage abhängig ist.

7. Verfahren nach einem der Ansprüche 1 bis 6, **dadurch gekennzeichnet, dass** das Überführen der Rotorblätter (5) in die Rückstellung erst begonnen wird, wenn alle Rotorblätter (5) den vorbestimmten oder vorbestimmbaren Pitchwinkel eingenommen haben.

8. Verfahren nach einem der Ansprüche 1 bis 7, **dadurch gekennzeichnet, dass** das Deaktivieren abgebrochen wird, wenn eine Anforderung einer Pitchregelung eintrifft.

9. Verfahren nach einem der Ansprüche 1 bis 8, **dadurch gekennzeichnet, dass**, wenn die Rotorblätter (5) sich in der Rückstellung befinden, bei Anforderung einer Pitchregelung die Pitchumrichter (73) zeitverzögert aktiviert werden, insbesondere mit Verzögerungen, die nicht synchron sind mit einer Periodendauer im Stromnetz, insbesondere mit einer Verzögerung in einem Bereich zwischen 11 ms und 29 ms,

10. Verfahren nach Anspruch 9, **dadurch gekennzeichnet, dass** der Pitchumrichter (73) für dasjenige Rotorblatt (5) mit dem momentan größten Drehmomentbedarf zuerst eingeschaltet wird.

11. Verfahren nach einem der Ansprüche 1 bis 10, **dadurch gekennzeichnet, dass** das Verfahren im Rahmen einer sicherheitsgerichteten Steuerung ausgeführt wird.

12. Steuervorrichtung (8) für Pitchantriebe (7) einer Windenergieanlage (1) mit einem Rotor mit wenigstens zwei individuell pitchverstellbaren Rotorblättern (5), denen jeweils ein Pitchantrieb (7) umfassend einen Pitchmotor (71), eine Pitchbremse (72) und einen Pitchumrichter (73) zugeordnet ist, wobei die Steuervorrichtung (8) ausgebildet ist, Steuerbefehle über eine Datenkommunikationsschnittstelle an die Pitchantriebe (7) zu senden und die Rotorblätter (5) in eine Rückstellung zu überführen, in der sie mittels der Pitchbremsen (72) bei einem vorbestimmten oder vorbestimmbaren Pitchwinkel eingebremst werden und die Pitchumrichter (73) deaktiviert werden, **dadurch gekennzeichnet, dass** die Steuervorrichtung (8) ausgebildet und eingerichtet ist, die Pitchumrichter (73) der wenigstens zwei Rotorblätter (5) in einer zeitlichen Sequenz nacheinander zu deaktivieren, wobei die Sequenz jeweils eine Wartezeit zwischen aufeinanderfolgenden Deaktivierungen aufweist.

13. Steuervorrichtung (8) nach Anspruch 12, **dadurch gekennzeichnet, dass** sie ausgebildet und eingerichtet ist, ein Verfahren nach einem der Ansprüche 1 bis 11 durchzuführen.

14. Windenergieanlage (1) mit einem Rotor mit wenigstens zwei individuell pitchverstellbaren Rotorblättern (5), denen jeweils ein Pitchantrieb (7) umfassend einen Pitchmotor (71), eine Pitchbremse (72) und einen Pitchumrichter (73) zugeordnet ist, sowie mit einer Steuervorrichtung (8) für die Pitchantriebe (7) nach Anspruch 12 oder 13.

## Claims

1. A method for controlling pitch drives (7) of a wind turbine (1) with a rotor having at least two individually pitch-adjustable rotor blades (5) to which a pitch drive (7) is assigned in each case comprising a pitch motor (71), a pitch brake (72) and a pitch inverter (73), wherein the rotor blades (5), upon transferring from a pitch-controlled full load range to a partial load range, transition into a reset in which they are braked by means of the pitch brakes (72) at a current or predetermined pitch angle, and the pitch inverters (73) are deactivated, **characterized in that** the pitch inverters (73) of the at least two rotor blades (5) are sequentially deactivated in a time sequence, wherein the sequence has a wait time between sequential deactivations in each case.

2. The method according to claim 1, **characterized in that** the deactivation of the pitch inverter (73) comprises shutting off or transitioning into a sleep state.

3. The method according to claim 1 or 2, **characterized in that** the wait time is greater than a precarious time (105) of the pitch inverters (73) in which a safe return from deactivation to operation is not ensured, wherein the wait time is in particular between 1.5 and 12 seconds, in particular 2 seconds or more.

4. The method according to one of claims 1 to 3, **characterized in that** the pitch inverters (73) do not receive or process any control commands after it is deactivated within a control wait time that is as long as the precarious time, or longer than the precarious time, in particular equivalent to the wait time.

5. The method according to one of claims 1 to 4, **characterized in that** the transition of the rotor blades (5) into the reset always starts at a predetermined or predeterminable rotor position, in particular the 5 o'clock position or 11 o'clock position of the respective rotor blade (5).

6. The method according to claim 5, **characterized in that** the selection of the rotor position at the start of the transition of the rotor blades (5) into the reset depends on a current windspeed, a current rotor rotational speed, and/or a current output of the wind turbine.

7. The method according to one of claims 1 to 6, **characterized in that** the transitioning of the rotor blades (5) into the reset only starts when all of the rotor blades (5) have assumed the predetermined or predeterminable pitch angle.

8. The method according to one of claims 1 to 7, **characterized in that** the deactivation is terminated when a pitch control request is received.

9. The method according to one of claims 1 to 8, **characterized in that** when the rotor blades (5) are in the reset, the pitch inverters (73), upon a pitch control request, are activated at a delay, in particular at delays that are not synchronous with a period in the power grid, in particular at a delay within a range between 11 ms and 29 ms.

10. The method according to claim 9, **characterized in that** the pitch inverter (73) for the respective rotor blade (5) with the largest torque requirement at the moment is switched on first.

11. The method according to one of claims 1 to 10, **characterized in that** the method is performed in the context of safety-oriented control.

12. A control apparatus (8) for pitch drives (7) of a wind turbine (1) with a rotor having at least two individually pitch-adjustable rotor blades (5) to which a pitch drive (7) comprising a pitch motor (71), a pitch brake (72) and a pitch inverter (73) is assigned in each case, wherein the control apparatus (8) is designed to transmit control commands via a data communication interface to the pitch drives (7) and to transition the rotor blades (5) into a reset in which they are braked by means of the pitch brakes (72) at a predetermined or predeterminable pitch angle, and the pitch inverters (73) are deactivated, **characterized in that** the control apparatus (8) is designed and configured to sequentially deactivate the pitch inverters (73) of the at least two rotor blades (5) in a time sequence, wherein the sequence always has a wait time between sequential deactivations.

13. The control apparatus (8) according to claim 12, **characterized in that** it is designed and configured to perform the method according to one of claims 1 to 11.

14. A wind turbine (1) with a rotor having at least two individually pitch-adjustable rotor blades (5) to which a pitch drive (7) comprising a pitch motor (71), a pitch brake (72) and a pitch inverter (73) is assigned in each case, as well as with a control apparatus (8) for the pitch drives (7) according to claims 12 or 13.

## Revendications

1. Procédé pour commander des mécanismes d'entraînement à pas variable (7) d'une éolienne (1) ayant un rotor comportant au moins deux pales de rotor (5) dont le pas peut être réglé individuellement, chacune d'elles étant respectivement couplée à un mécanisme d'entraînement à pas variable (7) incluant un moteur à pas variable (71), un frein à pas variable (72) et un convertisseur de pas (73), dans lequel les pales de rotor (5) sont ramenées dans une position initiale lors d'un passage d'une plage de fonctionnement à pleine charge à pas régulé à une plage de fonctionnement à charge partielle, position initiale dans laquelle elles sont freinées au moyen des freins à pas variable (72) à un angle de pas actuel ou prédéterminé, et les convertisseurs de pas (73) sont désactivés, **caractérisé en ce que** les convertisseurs de pas (73) desdites au moins deux pales de rotor (5) sont désactivés successivement dans une séquence temporelle, la séquence comportant respectivement un temps d'attente entre des désactivations successives.

2. Procédé selon la revendication 1, **caractérisé en ce que** la désactivation des convertisseurs de pas (73) comprend un arrêt ou une mise à l'état de repos.

3. Procédé selon la revendication 1 ou la revendication 2, **caractérisé en ce que** le temps d'attente est supérieur à un temps d'instabilité (105) des convertisseur de pas (73), au cours duquel un retour fiable au fonctionnement normal à partir de la désactivation n'est pas assuré, le temps d'attente étant compris en particulier entre 1,5 et 12 secondes, et est en particulier égal à 2 secondes ou plus.

4. Procédé selon l'une des revendications 1 à 3, **caractérisé en ce que** les convertisseurs de pas (73), après leur désactivation, ne reçoivent ou ne traitent aucune demande de régulation pendant un temps d'attente de régulation dont la durée est égale au temps d'instabilité ou supérieure au temps d'instabilité, et est en particulier égale au temps d'attente.

5. Procédé selon l'une des revendications 1 à 4, **caractérisé en ce que** le passage des pales de rotor (5) à la position initiale débute respectivement dans une position de rotor prédéterminée ou pouvant être prédéterminée, en particulier dans la position à 5 heures ou dans la position à 11 heures de la pale de rotor (5) respective.

6. Procédé selon la revendication 5, **caractérisé en ce que** la sélection de la position de rotor pour débuter le passage des pales de rotor (5) à la position initiale dépend de la vitesse actuelle du vent, de la vitesse de rotation actuelle du rotor et/ou d'une charge actuelle de l'éolienne.

7. Procédé selon l'une des revendications 1 à 6, **caractérisé en ce que** le passage des pales de rotor (5) à la position initiale ne débute que lorsque toutes les pales de rotor (5) ont atteint l'angle de pas prédéterminé ou pouvant être prédéterminé.

8. Procédé selon l'une des revendications 1 à 7, **caractérisé en ce que** la désactivation est interrompue en cas d'entrée d'une demande de régulation de pas.

9. Procédé selon l'une des revendications 1 à 8, **caractérisé en ce que**, lorsque les pales de rotor (5) sont dans la position initiale, les convertisseurs de pas (73) sont activés de manière temporisée en cas de demande de régulation de pas, en particulier avec des temporisations qui ne sont pas synchronisées avec une durée de période du réseau électrique, en particulier avec une temporisation située dans une plage comprise entre 11 ms et 29 ms.

10. Procédé selon la revendication 9, **caractérisé en ce que** les convertisseurs de pas (73) pour chaque pale de rotor (5) sont d'abord mis en fonctionnement avec la demande de couple instantanée maximale.

11. Procédé selon l'une des revendications 1 à 10, **caractérisé en ce que** le procédé est mis en oeuvre dans le cadre d'une commande de sécurité.

12. Dispositif de commande (8) pour des mécanismes d'entraînement à pas variable (7) d'une éolienne (1) ayant un rotor comportant au moins deux pales de rotor (5) dont le pas peut être réglé individuellement, chacune d'elles étant respectivement couplée à un mécanisme d'entraînement à pas variable (7) incluant un moteur à pas variable (71), un frein à pas variable (72) et un convertisseur de pas (73), dans lequel le dispositif de commande (8) est configuré de manière à envoyer aux mécanismes d'entraînement à pas variable (7) des instructions de commande par le biais d'une interface de communication de données, et à amener les pales de rotor (5) dans une position initiale dans laquelle elles sont freinées au moyen des freins à pas variable (72) à un angle de pas prédéterminé ou pouvant être prédéterminé et les convertisseurs de pas (73) sont désactivés, **caractérisé en ce que** le dispositif de commande (8) est configuré et adapté pour désactiver successivement les convertisseurs de pas (73) desdites au moins deux pales de rotor (5) dans une séquence temporelle, la séquence comportant respectivement un temps d'attente entre des désactivations successives.

13. Dispositif de commande (8) selon la revendication 12, **caractérisé en ce qu'**il est configuré et adapté pour mettre en oeuvre un procédé selon l'une des revendications 1 à 11.

14. Éolienne (1) ayant un rotor comportant au moins deux pales de rotor (5) dont le pas peut être réglé individuellement, chacune d'elles étant respectivement couplée à un mécanisme d'entraînement à pas variable (7) incluant un moteur à pas variable (71), un frein à pas variable (72) et un convertisseur de pas (73), ainsi qu'un dispositif de commande (8) pour les mécanismes d'entraînement à pas variable (7) selon la revendication 12 ou 13.
